# EUROPÄISCHE PATENTSCHRIFT

(11) **EP 0 570 404 B1**
(45) Veröffentlichungstag und Bekanntmachung des Hinweises auf die Patenterteilung: **02.05.1997**
(21) Anmeldenummer: 92903573.1
(22) Anmeldetag: 03.02.1992
(51) Int. Cl.: C08J 3/12, C08F 2/32

(54) **AGGLOMERIERTE POLYMERTEILCHEN AUS FEINTEILIGEN, WASSERLÖSLICHEN ODER WASSERQUELLBAREN POLYMERISATEN**
AGGLOMERATED POLYMER PARTICLES PRODUCED FROM FINELY DIVIDED WATER-SOLUBLE OR WATER-SWELLABLE POLYMERISATES
PARTICULES AGGLOMEREES EN POLYMERES FINEMENT PULVERISES SOLUBLES OU GONFLABLES DANS L'EAU

(30) Priorität: 09.02.1991 DE 4103969
(43) Veröffentlichungstag der Anmeldung: 24.11.1993
(73) Patentinhaber: BASF Aktiengesellschaft, 67063 Ludwigshafen (DE)
(72) Erfinder: SCHNEIDER, Reinhard, D-6710 Frankenthal (DE); GRUND, Norbert, D-6700 Ludwigshafen (DE); HARTMANN, Heinrich, D-6703 Limburgerhof (DE)
(86) Internationale Anmeldenummer: EP9200226
(87) Internationale Veröffentlichungsnummer: WO9213912

(56) Entgegenhaltungen:
- EP-A- 0 150 933
- EP-A- 0 161 038
- DE-A- 2 926 103
- US-A- 3 849 361
- US-A- 3 975 341

## Beschreibung

Die Erfindung betrifft agglomerierte Polymerteilchen aus feinteiligen, wasserlöslichen oder wasserquellbaren Polymerisaten und ein Verfahren zur Herstellung durch Agglomerieren und Isolieren der Polymerteilchen aus Wasser-in-Öl-Emulsionen von wasserlöslichen oder wasserquellbaren Polymerisaten und die Verwendung der Polymerisate als Flockungsmittel, Retentions- und Entwässerungsmittel und als Verdickungsmittel zur Erhöhung der Viskosität wäßriger Systeme.

Nach dem Verfahren der umgekehrten Suspensionspolymerisation gemäß der US-PS 2 982 749 sind perlförmige, wasserlösliche Polymerisate dadurch erhältlich, daß man eine wäßrige Lösung von Monomeren in einer hydrophoben Flüssigkeit unter Verwendung von wasser-in-Öl-Suspensionsmitteln suspendiert und die Monomeren darin in Gegenwart eines Polymerisationsinitiators polymerisiert. Die dabei entstehenden Polymerisatkügelchen werden abgetrennt und getrocknet. Aufgrund der Teilchengröße von etwa 100 bis 500 µm bereitet die Isolierung der Polymerkügelchen keine Schwierigkeiten.

Aus der US-PS 3 284 393 ist ein Verfahren zur Herstellung von Wasser-in-Öl-Emulsionspolymerisaten bekannt, bei dem man die wasserlöslichen Monomeren in Gegenwart von Wasser-in-Öl-Emulgatoren unter Einwirkung hoher Scherkräfte in einer inerten hydrophoben Flüssigkeit emulgiert und dann darin in Gegenwart von Radikale bildenden Polymerisationsinitiatoren polymerisiert. Die durchschnittliche Teilchengröße der Polymerisate beträgt beispielsweise 0,1 µm. Die Polymerisate können aus solchen Wasser-in-Öl-Polymeremulsionen nicht durch Filtrieren oder Zentrifugieren isoliert werden. Um sie in reiner Form zu gewinnen, ist es vielmehr erforderlich, die Polymerisate aus der Emulsion zu flocken und danach zu filtrieren. Dieses Verfahren kommt für eine technische Nutzung nicht in Betracht, weil wegen des Einsatzes größerer Mengen an Fällungsmitteln eine aufwendige Reinigung der Ölphase erforderlich ist. Wasser-in-Öl-Emulsionen wasserlöslicher Polymerisate wurden daher gemäß der Lehre der US-PS 3 642 019 direkt verwendet, indem man die Wasser-in-Öl-Polymeremulsion in Gegenwart eines Netzmittels in einem wäßrigen Medium invertiert, wobei das Polymerisat rasch in Lösung geht. Nachteilig ist hierbei, daß die Ölphase der Wasser-in-Öl-Polymeremulsion dabei verloren geht.

Aus der US-PS 4 059 552 sind vernetzte, feinteilige Polymerisate bekannt, deren Teilchendurchmesser weniger als 4 µm beträgt. Diese Polymerisate werden aus wasserlöslichen, monoethylenisch ungesättigten Monomeren in Gegenwart von Vernetzern nach dem Verfahren der Wasser-in-Öl-Emulsionspolymerisation oder nach dem Verfahren der umgekehrten Suspensionspolymerisation hergestellt. Bei beiden Verfahren wird zur Einstellung der gewünschten geringen Teilchengröße der Polymerisate eine spezielle Emulgiervorrichtung benötigt. Die feinteiligen Wasser-in-öl-Polymeremulsionen werden einer azeotropen Destillation unterworfen, um daraus Wasser abzudestillieren. Die Polymerisate werden dadurch erhalten, daß man zu der azeotrop entwässerten Polymersuspension ein Flockungsmittel zusetzt und die Polymerteilchen danach abfiltriert. Wie bereits oben ausgeführt, ist die Verwendung eines Flockungsmittels technisch aufwendig.

Aus der DE-OS 24 19 764 ist die azeotrope Entwässerung von Wasser-in-Öl-Polymeremulsionen zu nichtwäßrigen Polymerdispersionen bekannt. Die mittlere Teilchengröße der Polymerisate beträgt 0,01 bis 1 µm. Diese feinteiligen Dispersionen zeichnen sich durch eine hohe Lagerstabilität aus. Die Polymerisate können daraus nicht durch Filtrieren, Dekantieren oder Zentrifugieren gewonnen werden.

Aus der DE-OS 25 57 324 ist ein Verfahren zur Herstellung von sedimentationsstabilen Wasser-in-Öl-Dispersionen von Acrylamidpolymerisaten bekannt. Man verwendet hierfür Netzmittel mit einem HLB-Wert oberhalb von 10 und spezielle Wasser-in-Öl-Emulgatoren. Die in den Emulsionen enthaltenen Polymerisate können ebenfalls nicht abfiltriert oder abzentrifugiert werden.

Nach dem Verfahren der DE-OS 36 41 700 erhält man Wasser-in-Öl-Emulsionen vernetzter, wasserquellbarer Polymerisate durch Copolymerisieren von wasserlöslichen ethylenisch ungesättigten Monomeren mit 100 bis 5000 ppm, bezogen auf die Monomermischung, eines mindestens bifunktionellen Vernetzers in der wäßrigen Phase einer Wasser-in-Öl-Emulsion in Gegenwart eines Wasser-in-Öl-Emulgators und eines Emulgators mit einer HLB-Wert von mindestens 10 unter Verwendung von wasserlöslichen Polymerisationsinitiatoren. Aus solchen Dispersionen kann das Polymerisat nicht durch einfaches Filtrieren, Dekantieren oder Zentrifugieren gewonnen werden.

Aus der US-A-3 849 361 ist die Herstellung mikrodisperser Suspensionen von wasserlöslichen oder wasserdispergierbaren Polymeren in Polyglykolen durch azeotropes Entwässern von Wasser-in-Öl-Polymeremulsionen, nachfolgendem Zusatz von Polyglykolen und Abdestillieren der Öle der ursprünglich eingesetzten Wasser-in-Öl-Polymeremulsionen bekannt. Die so erhältlichen sedimentations-stabilen Polymersuspensionen in Polyglykolen werden direkt angewendet, z.B. als Verdickungsmittel für wäßrige Systeme.

Aus der US-A-3 975 341 ist ein Verfahren zur Herstellung von feinteiligen Polymerisaten bekannt, die beim Eintragen in Wasser gelfreie wäßrige Lösungen bilden. Die Polymerisate werden hergestellt, indem man zu einer unter Rückfluß siedenden azeotropen Emulsion, die aus einer größeren Menge eines Öls und einer kleineren Menge an Wasser besteht, kontrolliert eine wäßrige Lösung zufügt, die einen Polymerisationsinitiator und mindestens etwa 50 Gew.%, bezogen auf die Lösung, an wasserlöslichen monoethylenisch ungesättigten Monomeren enthält. Nach Beendigung der Monomerzugabe wird das Wasser azeotrop abdestilliert und das feinteilige Polymerisat abfiltriert. Um wasserlösliche Polymerisate zu erhalten, erfolgt die Polymerisation in Gegenwart eines Gelinhibitors, z.B. Isopropanol, Isobutanol, Glycerin oder 1,3-Butylenglykol. Die Polymerisatteilchen bestehen aus einer fest zusammenhängenden Aggregation kleinerer Polymerteilchen.

Aus der nicht vorveröffentlichten EP-A-412 388 ist ein Verfahren zur Herstellung von feinteiligen Polymerisatpulvern durch Polymerisieren von wasserlöslichen Monomeren in der wäßrigen Phase einer Wasser-in-Öl-Emulsion in Gegenwart von Wasser-in-Öl-Emulgatoren und Polymerisationsinitiatoren, azeotropes Entwässern der entstandenen Wasser-in-Öl-Polymersuspension und Isolierung der suspendierten feinteiligen Polymerisatpulver bekannt, wobei man entweder die Polymerisation der wasserlöslichen Monomeren in Gegenwart von 0,1 bis 10 Gew.%, bezogen auf die bei der Polymerisation eingesetzten Monomeren, an Schutzkolloiden durchführt oder die Schutzkolloide der Wasser-in-Öl-Polymersuspension nach Beendigung der Polymerisation zusetzt. Bei diesem Verfahren findet eine Agglomeration der Primärteilchen der Wasser-in-Öl-Polymeremulsionen statt, so daß man filtrierbare Polymersuspensionen erhält. Durch Zusatz von aprotischen, polaren Lösemitteln kann die Filtrierbarkeit der nach dem azeotropen Entwässern vorliegenden Polymersuspensionen zwar verbessert werden, jedoch wäre eine weitergehende verbesserte Filtrierbarkeit wünschenswert.

Aus der EP-A-0 150 933 ist bekannt, wasserlösliche Monomere in Gegenwart eines Wasser-in-Öl-Emulgators wie Sorbitanmonostearat oder Sorbitanmonooleat nach dem Verfahren der umgekehrten Suspensionspolymerisation zu polymerisieren. Hierbei entstehen Dispersionen, die Teilchengrößen von weniger als 5 µm haben. Diese Dispersionen werden in einem 2. Verfahrensschritt azeotrop entwässert und mit einem oberflächenaktiven Mittel versetzt. Das oberflächenaktive Mittel kann ggf. auch vor der Entwässerung zur Wasser-in-Öl-Polymeremulsion gegeben werden. Die Teilchengrößen der Polymeren liegen jedoch immer unterhalb von 5 µm.

Wie aus dem oben angegebenen Stand der Technik hervorgeht, können die nach der umgekehrten Wasser-in-Öl-Polymerisation erhältlichen Polymerisate zwar relativ leicht gewonnen werden, jedoch ist dieses Verfahren in der Praxis relativ aufwendig und führt zu Polymerisatperlen, die nicht sofort in Wasser rückstandsfrei auflösbar sind. Dagegen erhält man durch Einrühren einer Wasser-in-Öl-Polymeremulsion in Gegenwart eines Netzmittels praktisch sofort eine wäßrige Polymerlösung. Der Nachteil hierbei ist jedoch, daß die Ölphase verlorengeht. Dies ist außerdem aus ökologischen Gründen nicht erwünscht. Die nach den übrigen Verfahren aus Wasser-in-Öl-Polymeremulsionen erhaltenen Pulver haben häufig den Nachteil, daß sie beim Handhaben stark stauben.

Der vorliegenden Erfindung liegt die Aufgabe zugrunde, feinteilige, wasserlösliche oder wasserquellbare Polymerisate und ein Verfahren zu ihrer Herstellung zur Verfügung zu stellen. Die Polymerisatpulver sollen praktisch nicht stauben und eine möglichst einheitliche Teilchengrößenverteilung aufweisen.

Die zuerst genannte Aufgabe wird erfindungsgemäß gelöst mit agglomerierten Polymerteilchen aus wasserlöslichen oder wasserquellbaren Polymerisaten mit einem mittleren Teilchendurchmesser von 20 bis 5000 µm, die dadurch gekennzeichnet sind, daß sie aus Primärteilchen mit einem mittleren Teilchendurchmesser von 0,1 bis 15 µm bestehen, die durch Polymerisieren von wasserlöslichen Monomeren, gegebenenfalls in Gegenwart von Vernetzungsmitteln, nach Art einer Wasser-in-Öl-Polymerisation erhältlich sind und durch azeotropes Entwässern der die Primärteilchen enthaltenden Wasser-in-Öl-Polymeremulsion in Gegenwart von agglomerierend wirkenden Polyallylenglykolen, die mindestens 2 Alkylenoxid-Einheiten einpolymerisiert enthalten, und die ausgewählt sind aus der Gruppe der Polyethylenglykole, Polypropylenglykole, Blockcopolymerisate aus Ethylenoxid und Propylenoxid, ein- und beidseitig mit C₁- bis C₄-Alkoholen veretherten Polyethylenglykole und Anlagerungsprodukte von Ethylenoxid und Propylenoxid an Ethylendiamin herstellbar sind und daß die agglomerierten Polymerteilchen beim Eintragen in ein wäßriges Medium in die Primärteilchen zerfallen.

Die andere Aufgabe wird erfindungsgemäß gelöst mit einem Verfahren zur Herstellung von feinteiligen, wasserlöslichen oder wasserquellbaren Polymerisaten durch Isolieren der Polymerteilchen aus Wasser-in-Öl-Emulsionen von wasserlöslichen oder wasserquellbaren Polymerisaten, wenn man die Wasser-in-Öl-Polymeremulsionen in Gegenwart von 1 bis 40 Gew.%, bezogen auf die Polymeren, an agglomerierend wirkenden Polyalkylenglykolen, die mindestens 2 Alkylenoxid-Einheiten einpolymerisiert enthalten, und die ausgewählt sind aus der Gruppe der Polyethylenglykole, Polypropylenglykole, Blockcopolymerisate aus Ethylenoxid und Propylenoxid, ein- und beidseitig mit C₁- bis C₄-Alkoholen veretherten Polyethylenglykole und Anlagerungsprodukte von Ethylenoxid und Propylenoxid an Ethylendiamin azeotrop unter Agglomeration der Primärteilchen der Polymeremulsionen entwässert und die agglomerierten Polymerteilchen isoliert.

Nach dem erfindungsgemäßen Verfahren erhält man aus Wasser-in-Öl-Polymeremulsionen praktisch nichtstaubende Pulver mit einer einheitlichen Teilchengrößenverteilung.

Wasser-in-Öl-Emulsionen von wasserlöslichen oder von wasserquellbaren Polymerisaten sind bekannt, vgl. US-A-3 284 393, US-A-4 059 552, DE-A-36 41 700 und US-A-3 849 361. Die Wasser-in-Öl-Polymeremulsionen sind dadurch erhältlich, daß man wasserlösliche monoethylenisch ungesättigte Monomere, gegebenenfalls zusammen mit Monomeren, die als Vernetzer wirken und mindestens zwei ethylenisch ungesättigte Doppelbindungen enthalten, in der wäßrigen Phase einer Wasser-in-Öl-Emulsion in Gegenwart von Wasser-in-Öl-Emulgatoren und Polymerisationsinitiatoren polymerisiert.

Bei der Polymerisation können sämtliche wasserlöslichen monoethylenisch ungesättigten Monomeren eingesetzt werden. Bei diesen Monomeren handelt es sich beispielsweise um monoethylenisch ungesättigte C₃- bis C₆-Carbonsäuren, wie Acrylsäure, Methacrylsäure, Itaconsäure, Maleinsäure, Fumarsäure und Methacrylsäure sowie um die Amide dieser Carbonsäuren, insbesondere Acrylamid und Methacrylamid. Weitere geeignete wasserlösliche Monomere sind beispielsweise 2-Acrylamidomethylpropansulfonsäure, Vinylsulfonsäure, Vinylphosphonsäure und Vinylmilchsäure. Die Monomeren, die Carboxyl-, Sulfonsäure- oder Phosphonsäuregruppen enthalten, können auch in partiell oder in vollständig mit Alkalimetallbasen, Ammoniak oder Aminen neutralisierter Form bei der Polymerisation eingesetzt werden.

Weitere geeignete wasserlösliche monoethylenisch ungesättigte Monomere sind Di-C₁- bis C₃-Alkylamino-C₂- bis C₆-Alkyl(meth)acrylate, wie Dimethylaminoethylacrylat, Dimethylaminoethylmethacrylat, Diethylaminoethylacrylat, Diethylaminoethylmethacrylat, Dimethylaminopropylacrylat, Dimethylaminobutylacrylat, Dimethylaminoneopentylacrylat und Dimethylaminoneopentylmethacrylat. Die basischen Acrylate und Methacrylate werden vorzugsweise als Salz oder in quaternisierter Form bei der Homo- oder Copolymerisation eingesetzt. Die Neutralisation der basischen Acrylate und Methacrylate erfolgt beispielsweise mit Hilfe von Salzsäure, Bromwasserstoffsäure, Schwefelsäure, Phosphorsäure und Carbonsäuren, wie Ameisensäure, Essigsäure und Propionsäure. Außerdem werden die basischen Acrylate und Methacrylate in quaternisierter Form eingesetzt. Die Quaternisierungsprodukte werden erhalten, indem man diese Verbindungen mit üblichen Quaternisierungsmitteln, wie Methylchlorid, Ethylchlorid, Benzylchlorid, Laurylchlorid, Dimethylsulfat, Diethylsulfat oder Epichlorhydrin quaternisiert. Geeignete Monomere sind auch olefinisch ungesättigte Nitrile, wie Acrylnitril oder Methacrylnitril.

Außerdem eignen sich wasserlösliche Diallylammoniumverbindungen der allgemeinen Formeln 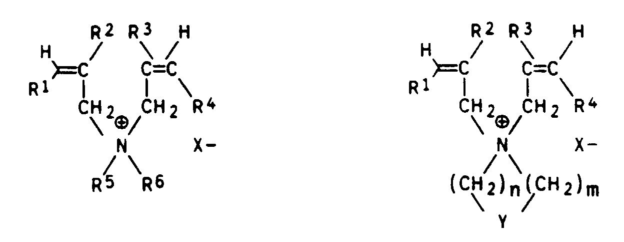 in der X⁻ für ein Halogenidion, wie Chlorid-, Fluorid-, Bromid- und Iodid- oder ein Hydroxid-, Nitrat-, Methosulfat-, Hydrogensulfat- oder Dihydrogenphosphation steht, n und m ganze Zahlen von 1 bis 2, vorzugsweise n = m =2,
Y = 〉N-Methyl, 〉N-Ethyl, vorzugsweise ein Sauerstoffatom oder eine 〉CH₂-Gruppe, und

R¹, R², R³ und R⁴ jeweils ein Wasserstoff oder einen Alkylrest mit 1 bis 6 Kohlenstoffatomen und R⁵ und R⁶ H oder einen Alkylrest, der geradkettig oder verzweigtkettig sein kann, mit 1 bis 18 Kohlenstoffatomen, vorzugsweise 1 bis 6 Kohlenstoffatomen oder einen Aryl- und/oder Benzylrest bedeuten.

Derartige diolefinisch ungesättigte Monomere sind z.B. Dimethyldiallylammoniumchlorid, Dimethyldiallylammoniumbromid, Diethyldiallylammoniumchlorid, Methyl-tert.-butyldiallylammoniummethosulfat, Methyl-n-propyldiallylammoniumchlorid, Dimethyldiallylammoniumhydrogensulfat, Dimethyldiallylammoniumdihydrogenphosphat, Di-n-butyl-diallylammoniumbromid, Diallylpiperidiniumbromid, Diallylpyrrolidiniumchlorid und Diallylmorpholiniumbromid.

Geeignet sind auch N-Vinylpyrrolidone, wie N-Vinylpyrrolidon. Als wasserlösliches Monomer kommt auch N-Vinylformamid in Betracht. Es wird entweder allein oder in Mischung mit anderen ethylenisch ungesättigten Monomeren copolymerisiert, z.B. mit N-Vinylpyrrolidon, Acrylamid, Methacrylamid, Vinylacetat, N-Vinylimidazol, N-Vinylimidazolin und/oder Dimethylaminoethylacrylat.

Eine weitere Gruppe von wasserlöslichen Monomeren sind N-Methylolamide von C₃- bis C₆-monoethylenisch ungesättigten Carbonsäuren, z.B. N-Methylolacrylamid und N-Methylolmethacrylamid. Diese Monomeren werden vorzugsweise bei der Herstellung von Copolymerisaten eingesetzt, z.B. Copolymerisate aus Acrylamid und N-Methylolacrylamid oder Copolymerisate aus Acrylamid, Acrylsäure und N-Methylolacrylamid.

Außerdem kommen als wasserlösliche Monomere N-Vinylimidazolium-Verbindungen in Betracht, die beispielsweise mit Hilfe folgender Formel charakterisiert werden können: 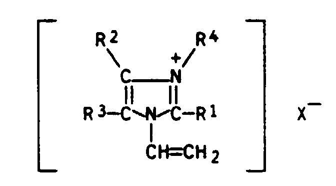 in der R¹, R² und R³ = H, CH₃ und R¹ außerdem noch C₂H₅, C₃H₇ und C₄H₉ und R⁴ = H, C₁- bis C₆-Alkyl-, Benzyl- und 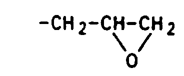 und X⁻ ein Anion, wie Cl⁻, Br⁻, J⁻, Methosulfat, Ethosulfat, Acetat, Sulfat, Hydrogensulfat und Dihydrogenphosphat sein kann. Vorzugsweise verwendet man aus dieser Verbindungsklasse das unsubstituierte N-Vinylimidazol in Salzform. Weitere geeignete wasserlösliche Monomere sind N-Vinylimidazoline, die beispielsweise mit Hilfe folgender allgemeiner Formel charakterisiert werden können: 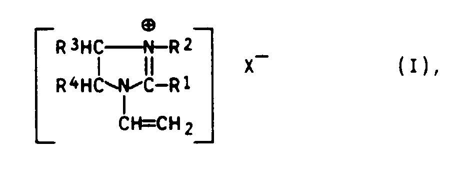 in der
R¹ = H, C₁- bis C₁₈-Alkyl, 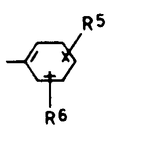
R⁵, R⁶ = H, C₁- bis C₄-Alkyl, Cl,
R² = H, C₁- bis C₁₈-Alkyl, 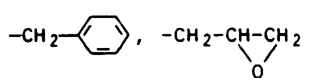
R³, R⁴ = H, C₁- bis C₄-Alkyl, und
X⁻ ein Säurerest bedeutet.

Vorzugsweise setzt man bei der Polymerisation aus dieser Gruppe von Verbindungen 1-Vinyl-2-imidazolin-Salze der Formel II ein 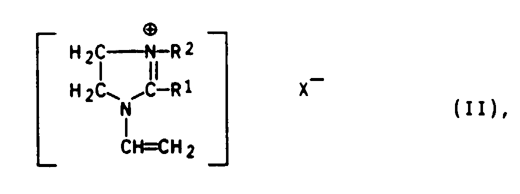 in der
R¹ = H, CH₃, C₂H₅, n⁻ und i-C₃H₇, C₆H₅ und
X⁻ ein Säurerest ist. X⁻ steht vorzugsweise für Cl⁻, Br⁻, SO₄²⁻, HSO₄^{⊖}, H₂PO₄^{⊖} , CH₃O-SO₃⁻, C₂H₅-O-SO₃⁻, R¹-COO⁻ und R² = H, C₁-bis C₄-Alkyl und Aryl.

Der Substituent X⁻ in den Formeln I und II kann prinzipiell jeder beliebige Säurerest einer anorganischen oder einer organischen Säure sein. Die Monomeren der Formel I werden erhalten, indem man die freie Base, d.h. 1-Vinyl-2-imidazoline, mit der äquivalenten Menge einer Säure neutralisiert. Die Vinylimidazoline können auch beispielsweise mit Trichloressigsäure, Benzolsulfonsäure oder Toluolsulfonsäure neutralisiert werden. Außer Salzen von 1-Vinyl-2-imidazolinen kommen auch quaternisierte 1-Vinyl-2-imidazoline in Betracht. Sie werden hergestellt, indem man 1-Vinyl-2-imidazoline, die gegebenenfalls in 2-, 4- und 5-Stellung substituiert sein können, mit bekannten Quaternisierungsmitteln umsetzt. Als Quaternisierungsmittel kommen beispielsweise C₁- bis C₁₈-Alkylchloride oder -bromide, Benzylchlorid, Benzylbromid, Epichlorhydrin, Dimethylsulfat und Diethylsulfat in Betracht. Als Quaternisierungsmittel verwendet man vorzugsweise Epichlorhydrin, Benzylchlorid, Dimethylsulfat und Methylchlorid.

Vorzugsweise kommen als wasserlösliche ethylenisch ungesättigte Monomere Acrylsäure, Methacrylsäure, 2-Acrylamido-2-methylpropansulfonsäure, N-Vinylpyrrolidon, Acrylamid und Methacrylamid sowie Diallyldimethylammoniumchlorid in Betracht. Die Monomeren können entweder allein zu Homopolymerisaten oder auch in Mischung miteinander zu Copolymerisaten polymerisiert werden. Von besonderem Interesse sind beispielsweise Copolymerisate aus Acrylamid und Acrylsäure, Copolymerisate aus Acrylamid und Methacrylsäure, Copolymerisate aus Methacrylamid und Acrylsäure, Copolymerisate aus Methacrylamid und Methacrylsäure, Copolymerisate aus Acrylamid, Acrylsäure und 2-Acrylamido-2-methylpropansulfonsäure, Copolymerisate aus Acrylamid, Acrylsäure und N-Vinylpyrrolidon, Copolymerisate aus Acrylamid und Dimethylaminoethylacrylat, Copolymerisate aus Acrylamid und Diethylaminoethylmethacrylat und Copolymerisate aus Methacrylamid und Dimethylaminoethylacrylat. Die Carbonsäuren und die anderen ethylenisch ungesättigten Säuren, wie Vinylsulfonsäure und Acrylamidomethylpropansulfonsäure, können entweder in Form der freien Säure, in partiell neutralisierter oder auch in vollständig neutralisierter Form bei der Polymerisation eingesetzt werden. Als Basen zur Neutralisation dieser Monomeren verwendet man beispielsweise Natronlauge, Kalilauge, Ammoniak, Amine, wie Triethylamin, Butylamin, Morpholin und Ethanolamin.

Weitere geeignete wasserlösliche monoethylenisch ungesättigte Monomere sind die Hydroxyalkylester von monoethylenisch ungesättigten C₃- bis C₅-Carbonsäuren, z.B. Hydroxyethylacrylat, Hydroxyethylmethacrylat, 2-Hydroxypropylacrylat, 3-Hydroxypropylacrylat, 3-Hydroxypropylmethacrylat, 2-Hydroxypropylmethacrylat, Hydroxybutylacrylate und Hydroxybutylmethacrylate, sowie 1,6-Hydroxyhexylacrylat. Diese Gruppe von Monomeren kann mit den anderen oben genannten Monomeren copolymerisiert werden. Von besonderem Interesse sind hier Copolymerisate aus Acrylamid und 2-Hydroxyethylacrylat, Copolymerisate aus Acrylamid, Acrylsäure und 2-Hydroxyethylacrylat und Copolymerisate aus Methacrylsäure, Acrylamid und 2-Hydroxyethylacrylat.

Die wasserlöslichen monoethylenisch ungesättigten Monomeren können gegebenenfalls zusammen mit wasserunlöslichen Monomeren copolymerisiert werden, um die Eigenschaften der wasserlöslichen Polymerisate zu modifizieren. Die wasserunlöslichen Monomeren werden dabei höchstens in einer solchen Menge eingesetzt, daß die entstehenden Polymerisate noch in Wasser löslich sind bzw. daß die Wasserlöslichkeit der Polymerisate in Form der Salze gegeben ist. Als wasserunlösliche Monomere kommen beispielsweise Vinylacetat, Vinylpropionat, Vinylbutyrat, C₁- bis C₁₈-Alkylester von monoethylenisch ungesättigten C₃- bis C₆-Carbonsäuren in Betracht, z.B. Methylacrylat, Ethylacrylat, n-Propylacrylat, Isopropylacrylat, n-Butylacrylat, Isobutylacrylat, n-Octylacrylat, Isooctylacrylat, Palmitylacrylat und Stearylacrylat sowie die entsprechenden Ester der Methacrylsäure, z.B. Methylmethacrylat, Ethylmethacrylat, n-Butylmethacrylat und Stearylmethacrylat. Weitere geeignete Ester dieser Art sind beispielsweise die Halbester der Maleinsäure, z.B. Monomethylmaleinat, Monobutylmaleinat und Monoethylitaconat.

Wasserquellbare Polymerisate werden hergestellt, indem man bei der Polymerisation von wasserlöslichen Monomeren, wie sie oben beispielhaft beschrieben sind, zusätzlich Vernetzer einsetzt, d.h. Verbindungen, die mindestens zwei ethylenisch ungesättigte, nichtkonjugierte Doppelbindungen im Molekül enthalten. Geeignete Vernetzer sind beispielsweise N,N'-Methylenbisacrylamid, Polyethylenglykoldiacrylate und Polyethylenglykoldimethacrylate, die sich jeweils von Polyethylenglykolen eines Molekulargewichts von 106 bis 8.500 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropandiallylether, Polyethylenglykoldivinylether, Butandioldivinylether, Pentaerythrittriallylether und/oder Divinylethylenharnstoff und/oder Triallylmonoalkylammoniumsalze, wie z.B. Triallylmethylammoniumchlorid. Vorzugsweise setzt man wasserlösliche Vernetzer ein, z.B. N,N'-Methylen-bisacrylamid, Polyethylenglykoldiacrylate, Polyethylenglykoldimethacrylate, Pentaerythrittriallylether und/oder Divinylharnstoff. Die Vernetzer werden in einer Menge von 50 bis 5000 ppm entsprechend etwa 0,003 bis 0,3 Mol.%, bezogen auf die bei der Polymerisation eingesetzten Monomeren, verwendet.

Um die Monomeren zu polymerisieren, löst man sie zunächst in Wasser. Die Konzentration der Monomeren in der wäßrigen Lösung beträgt 20 bis 80, vorzugsweise 30 bis 60 Gew.-%. Die wäßrige Lösung wird dann unter Bildung einer Wasser-in-Öl-Emulsion in einer inerten hydrophoben Flüssigkeit (Ölphase) in Gegenwart mindestens eines Wasser-in-Öl-Emulgators emulgiert. Als inerte hydrophobe Flüssigkeiten können praktisch alle mit Wasser nicht mischbaren Flüssigkeiten verwendet werden, die nicht in die Polymerisation eingreifen. Vorzugsweise verwendet man hierfür aliphatische und aromatische Kohlenwasserstoffe oder Mischungen aus aliphatischen und aromatischen Kohlenwasserstoffen. Geeignete aliphatische Kohlenwasserstoffe sind beispielsweise Pentan, Hexan, Heptan, Octan, Nonan, Decan, Cyclohexan, Methylcyclohexan, Decalin, Isooctan und Ethylcyclohexan. Aromatische Kohlenwasserstoffe, die als hydrophobe Flüssigkeit bei der umgekehrten Suspensionspolymerisation verwendet werden, sind beispielsweise Benzol, Toluol, Xylol und Isopropylbenzol. Daneben ist es selbstverständlich auch möglich, halogenierte Kohlenwasserstoffe, wie Tetrachlorethan, Hexachlorethan, Trichlorethan und Chlorbenzol zu verwenden. Vorzugsweise verwendet man Cyclohexan, Methylcyclohexan oder Kohlenwasserstoffe eines Siedebereiches von 60 bis 170°C. Der Anteil der Ölphase am Aufbau der Wasser-in-Öl-Polymeremulsion beträgt 15 bis 70, vorzugsweise 20 bis 60 Gew.-%.

Um die wäßrige Monomerlösung in der Ölphase zu dispergieren, verwendet man die dafür bekannten Wasser-in-Öl-Emulgatoren. Hierbei handelt es sich beispielsweise um Sorbitanester, wie Sorbitanmonostearat, Sorbitanmonooleat, Sorbitanpalmitat und Sorbitanlaurat sowie um Glycerinester, deren Säurekomponente sich von C₁₄- bis C₂₀-Carbonsäuren ableitet. Weitere geeignete Emulgatoren sind die aus der DE-PS 25 57 324 bekannten Wasser-in-Öl-Emulgatoren, die erhältlich sind durch Umsetzung von
A) C₁₀-C₂₂-Fettalkoholen mit Epichlorhydrin im Molverhältnis 1:0,5 bis 1:1,5 zu Glycidylethern,
B) Reaktion der Glycidylether mit (1) gesättigten, 2 bis 6 OH-Gruppen enthaltenden C₂-C₆-Alkoholen oder (2) deren Monoether mit C₁₀-C₂₂-Fettalkoholen, im Molverhältnis Glycidylether zu (1) oder (2) von 1:0,5 bis 1:6 in Gegenwart von Säuren oder Basen und
C) Alkoxylierung der Reaktionsprodukte gemäß (B) mit mindestens einem C₂-C₄-Alkylenoxid im Molverhältnis 1:1 bis 1:6.

Die in Betracht kommenden Wasser-in-Öl-Emulgatoren haben einen HLB-Wert von höchstens 8. Unter HLB-Wert versteht man die hydrophile-lipophile Balance des Emulgators, vgl. W.C. Griffin, J. Soc. Cosmet. Chem. Band 1, 311 (1949). Die Wasser-in-Öl-Emulgatoren werden, bezogen auf die eingesetzten Monomeren, in einer Menge von 2 bis 20, vorzugsweise 5 bis 15 Gew.% eingesetzt. Vorzugsweise werden diejenigen Wasser-in-Öl-Emulgatoren eingesetzt, die in der genannten DE-PS 25 57 324 beschrieben sind.

Als geeignete Radikale bildende Polymerisationsinitiatoren können sämtliche üblicherweise eingesetzte Polymerisationsinitiatoren verwendet werden. Bevorzugt sind wasserlösliche Initiatoren, wie Alkali- oder Ammoniumperoxidisulfate, Wasserstoffperoxid, Diacetylperoxidicarbonat, Dicyclohexylperoxidicarbonat, tert.-Butylperpivalat, Dilauroylperoxid, Dibenzoylperoxid, tert.-Butylper-2-ethylhexanoat, tert.-Butylpermaleinat, Bis-(tert.-butylperoxid)-cyclohexan, tert.-Butylperacetat, Dicumylperoxid, Di-tert.-amylperoxid, Di-tert.-butylperoxid, Cumylhydroperoxid, tert.-Butylhydroperoxid und p-Menthanhydroperoxid sowie Azoinitiatoren, wie 2,2'-Azobis(2-methyl-N-phenylpropionamidin)dihydrochlorid, 2,2'-Azobis(2-methylpropionamidin)dihydrochlorid, 2,2'-Azobis(2,4-dimethylvaleronitril), 2,2'-Azobis-(isobutyronitril), 2,2'-Azobis(2-amidinopropan)dihydrochlorid und 2,2'-Azobis-[2-(2-imidazolin-2-yl)propan]-dihydrochlorid. Bevorzugte Initiatoren sind Alkali- und Ammoniumpersulfate, tert.-Butylperpivalat, tert.-Butylper-2-ethylhexanoat, 2,2'-Azobis-(2,4-dimethylvaleronitril), 2,2'-Azobis(2-amidinopropan)dihydrochlorid, Azobis-(isobutyronitril) und 2,2'-Azobis[2-(2-imidzolin-2-yl)-propan]dihydrochlorid. Man kann entweder einen einzigen Initiator oder auch Mischungen mehrerer Initiatoren verwenden. Die Auswahl der Initiatoren richtet sich in erster Linie nach der Temperatur, bei der die Polymerisation durchgeführt wird. Man kann auch zusätzlich Salze von Schwermetallen, z.B. Kupfer-, Kobalt-, Mangan-, Eisen-, Nickel- und Chromsalze und/oder organische Verbindungen, wie Benzoin, Dimethylanilin, Ascorbinsäure sowie Reduktionsmittel, wie beispielsweise Alkalidisulfit oder Formaldehydnatriumsulfoxylat zusammen mit mindestens einem der oben angegebenen Radikale bildenden Polymerisationsinitiatoren einsetzen. Solche Mischungen von Initiatoren ermöglichen das Polymerisierer bei niedrigeren Temperaturen. Die reduzierende Komponente von sogenannten Redox-Initiatoren kann beispielsweise von Natriumsulfit, Natriumbisulfit, Natriumformaldehydsulfoxylat oder Hydrazin gebildet werden. Bezogen auf die bei der Polymerisation eingesetzten Monomeren benötigt man 100 bis 10.000, vorzugsweise 100 bis 2000 ppm eines Polymerisationsinitiators oder einer Mischung mehrerer Polymerisationsinitiatoren. Die angegebenen Initiatormengen entsprechen etwa 0,003 bis 0,3 Mol.% Initiator, bezogen auf die eingesetzten Monomeren.

In einer bevorzugten Ausführungsform der Erfindung wird die Polymerisation der wasserlöslichen Monomeren zusätzlich in Gegenwart mindestens eines Öl-in-Wasser-Emulgators durchgeführt. Der Einsatz dieser Gruppe von Emulgatoren ermöglicht die Herstellung besonders feinteiliger und sedimentationsstabiler Wasser-in-Öl-Polymeremulsionen. Geeignete Öl-in-Wasser-Emulgatoren sind beispielsweise sämtliche Netzmittel, die einen HLB-Wert von mindestens 10 haben. Bei dieser Gruppe von Emulgatoren handelt es sich im wesentlichen um hydrophile wasserlösliche Verbindungen, wie ethoxylierte Alkylphenole oder ethoxylierte Fettalkohole. Produkte dieser Art werden beispielsweise dadurch erhalten, daß man C₈- bis C₁₂-Alkylphenole oder C₈-C₂₂-Fettalkohole mit Ethylenoxid umsetzt. Vorzugsweise ethoxyliert man C₁₂-C₁₈-Fettalkohole. Das Molverhältnis von Alkylphenol bzw. Fettalkohol zu Ethylenoxid beträgt dabei im allgemeinen 1:5 bis 1:20. Weitere geeignete Emulgatoren sind beispielsweise alkoxylierte Fettamine. Sofern die Emulgatoren einen HLB-Wert von 10 oder darüber bei der Polymerisation eingesetzt werden, so verwendet man sie in Mengen von 1 bis 20, vorzugsweise 2 bis 15 Gew.-%, bezogen auf die zu polymerisierenden Monomeren.

Die Polymerisation der Monomeren erfolgt in der wäßrigen Phase einer Wasser-in-Öl-Emulsion in Gegenwart von Wasser-in-Öl-Emulgatoren und ggf. Öl-in-Wasser-Emulgatoren sowie in Gegenwart von Radikale bildenden Polymerisationsinitiatoren. Die dabei erhältlichen Wasser-in-Öl-Polymeremulsionen enthalten die Polymerisate in Form von Primärteilchen mit mittleren Teilchengrößen von ca. 0,1 bis 15 µm, vorzugsweise 0,5 bis 5 µm. Mindestens 90 % der Primärteilchen der Wasser-in-Öl-Polymeremulsion haben einen mittleren Teilchendurchmesser von < 10 µm.

Erfindungsgemäß werden die bekannten Wasser-in-Öl-Emulsionen von wasserlöslichen oder wasserquellbaren Polymerisaten in Gegenwart von 1 bis 40 Gew.%, bevorzugt 5 bis 20 Gew.%, bezogen auf die Polymeren, an agglomerierend wirkenden Polyalkylenglykolen entwässert, die mindestens 2 Alkylenoxid-Einheiten einpolymerisiert enthalten.

Die Polyalkylenglykole bewirken während der azeotropen Entwässerung der Wasser-in-Öl-Polymeremulsionen eine Agglomeration der Primärteilchen der Wasser-in-Öl-Polymeremulsion. Nach der azeotropen Entwässerung liegen Agglomerationen von Primärteilchen vor, die gemäß Siebanalyse einen mittleren Teilchendurchmesser von ca. 20 bis 5.000, vorzugsweise 50 bis 2500 µm haben. Das in den Wasser-in-Öl-Emulsionspolymerisaten enthaltene Wasser wird durch azeotrope Destillation zu mindestens 70 %, bevorzugt zu 80 bis 99 % entfernt. Geringe Mengen an Wasser, die in den Polymerisaten verbleiben, stören nicht, im Gegenteil, sie führen dazu, daß sich die agglomerierten Teilchen schneller in Wasser auflösen als vollständig getrocknete agglomerierte Teilchen. Handelsübliche Wasser-in-Öl-Polymeremulsionen, die einen Feststoffgehalt von mehr als 20 Gew.% aufweisen, werden zweckmäßigerweise vor Beginn der azeotropen Destillation mit 10 bis 200 Gew.%, bevorzugt mit 50 bis 150 Gew.%, eines Kohlenwasserstoffs mit einem Siedepunkt unter 150°C versetzt. Die azeotrope Entwässerung der Wasser-in-Öl-Polymeremulsionen kann bei Normaldruck, unter vermindertem Druck sowie unter erhöhtem Druck vorgenommen werden, z.B. in dem Bereich von 100 mbar bis 15 bar. Die Temperaturen werden vorzugsweise so gewählt, daß die Wasser-in-Öl-Polymeremulsionen, die entwässert werden, nach Möglichkeit nicht geschädigt werden. Üblicherweise werden die Wasser-in-Öl-Polymeremulsionen auf eine Temperatur in dem Bereich von 60 bis 170°C erhitzt.

Die als Agglomerationshilfsmittel in Betracht kommenden Polyalkylenglykole sind beispielsweise dadurch erhältlich, daß man die in Betracht kommenden Alkylenoxide, es sind dies Ethylenoxid, Propylenoxid, Butylenoxid-1,2, Isobutylenoxid und Tetrahydrofuran entweder allein oder in Mischung polymerisiert. Sofern Mischungen eingesetzt werden, erhält man polymere Verbindungen, in denen die Alkylenoxid-Einheiten statistisch verteilt sind. Man kann jedoch auch die Alkylenoxide in üblicher Weise zu Blockcopolymerisaten abreagieren lassen. Homopolymerisate des Ethylenoxids werden beispielsweise erhalten, indem man Ethylenoxid an Ethylenglykol anlagert. Zur Herstellung von Homopolymerisaten des Propylenoxids lagert man an Propylenglykol-1,2, Propylenglykol-1,3 oder an Mischungen der genannten Isomeren Propylenoxid an. Die Herstellung der Homopolymerisate der anderen Alkylenoxide erfolgt in entsprechender Weise.

Blockcopolymerisate werden beispielsweise dadurch hergestellt, daß man zunächst an Ethylenglykol Ethylenoxid anlagert und abreagieren läßt und danach Propylenoxid unter den üblichen Bedingungen, d.h. durch Katalyse mit Alkalihydroxiden oder Calciumoxid, anlagert. Hier gibt es viele Möglichkeiten, um die Reihenfolge der Blöcke von Alkylenoxid-Einheiten zu variieren. Beispielsweise kann sich an einen Ethylenoxid-Block ein Propylenoxid-Block und dann ein Ethylenoxid-Block anschließen. Ebenso sind Polyalkylenglykole als Agglomerationshilfsmittel einsetzbar, die einen Ethylenoxid-Block, einen Propylenoxid-Block und einen Butylenoxid-Block aufweisen oder Polyalkylenglykole, bei denen auf einen Propylenoxid-Block ein Ethylenoxid-Block folgt oder solche Polyalkylenoxide bei denen auf einen Butylenoxid-Block ein Propylenoxid-Block und gegebenenfalls ein Ethylenoxid-Block folgt.

Von besonderem Interesse sind hierbei handelsübliche Produkte, die beispielsweise durch nacheinander erfolgende Anlagerung von Ethylenoxid und Propylenoxid an Ethylendiamin erhältlich sind.

Die in Betracht kommenden Polyalkylenglykole enthalten mindestens 2 Alkylenoxid-Einheiten einpolymerisiert. Geeignete Agglomerationshilfsmittel sind beispielsweise Polyethylenglykole, Polypropylenglykole, Blockcopolymerisate aus Ethylenoxid- und Propylenoxidblöcken der Struktur EO-PO, PO-EO-PO oder EO-PO-EO, ein- oder beidseitig mit C₁- bis C₄-Alkoholen veretherte Polyethylenglykole und solche Verbindungen, die durch Anlagerung von zunächst Ethylenoxid und dann Propylenoxid oder in umgekehrter Reihenfolge an Ethylendiamin erhältlich sind. Geeignete agglomerierend wirkende Polyalkylenglykole sind z.B. Diethylenglykol, Triethylenglykol, Tetraethylenglykol, Pentamethylenglykol, Hexaethylenglykol, Heptaethylenglykol, Octaethylenglykol, Diethylenglykoldimethylether, Diethylenglykolmonomethylether, Diethylenglykoldiethylether, Diethylenglykolmonoethylether, Triethylenglykolmono- und -dimethylether, Triethylenglykolmono- und -diethylether, Dialkylenglykoldibutylether, Diethylenglykolmonobutylether, Diethylenglykolmonopropylether, Diethylenglykoldipropylether, EO-PO-Blockcopolymerisate mit mittleren Molekulargewichten von 120 bis 2 Millionen, PO-EO-PO-Blockcopolymerisate mit mittleren Molekulargewichten von 178 bis 2 Millionen und EO-PO-EO-Blockcopolymerisate mit mittleren Molekulargewichten von 164 bis 2 Millionen, Polypropylenglykole mit Molekulargewichten von 134 bis 2 Millionen, Dipropylenglykoldiacetat, Diethylenglykoldiacetat, Dipropylenglykolmonoacetat, Diethylenglykolmonoacetat, Dipropylenglykoldimethylether und Dipropylenglykolmonomethylether. Die angegebenen Molekulargewichte beziehen sich auf das Zahlenmittel. Die Agglomerationshilfsmittel werden vorzugsweise in Mengen von 5 bis 20 Gew.%, bezogen auf das in der Wasser-in-Öl-Emulsion vorhandene Polymere, eingesetzt. Nach der azeotropen Entwässerung in Gegenwart der Polyalkylenglykole liegen agglomerierte Polymerteilchen vor, die leicht isoliert werden können, z.B. durch Filtrieren, Abdekantieren des Kohlenwasserstofföls oder Zentrifugieren. Das den agglomerierten Teilchen noch anhaftende Kohlenwasserstofföl kann leicht aus den agglomerierten Polymerteilchen entfernt werden, z.B. durch Trocknen in einem Trockenschrank, vorzugsweise Trocknen bei höheren Temperaturen unter vermindertem Druck.

Von besonderem Interesse für die Anwendung als Verdickungsmittel zur Erhöhung der Viskosität wäßriger Systeme, insbesondere als Verdickungsmittel für Druckpasten, die zum Bedrucken von Textilien eingesetzt werden, sind wasserquellbare Polymerisate, die als wesentliche wasserlösliche monoethylenisch ungesättigte Monomere Acrylsäure, Acrylamid und N-Vinylpyrrolidon einpolymerisiert enthalten. Der Anteil an Vernetzungsmittel in den wasserquellbaren Polymerisaten beträgt ca. 50 bis 5000, vorzugsweise 200 bis 2000 ppm. Der Anteil an einpolymerisierter Acrylsäure liegt in dem Bereich von 60 bis 98 %, der einpolymerisierte Acrylamid-Anteil beträgt 1 bis 20 Gew.% und der Anteil an einpolymerisiertem N-Vinylpyrrolidon 1 bis 20 Gew.%. Nach dem erfindungsgemäßen Verfahren erhält man insbesondere dann Pulver mit einheitlicher Teilchengrößenverteilung, wenn die Polymerisate der Wasser-in-Öl-Polymeremulsionen mindestens 1 Gew.% N-Vinylpyrrolidon einpolymerisiert enthalten. Bei überwiegend aus anionisch aufgebauten Polymerisaten ergibt ein Gehalt von 3 bis 25 Gew.% einpolymerisiertem N-Vinylpyrrolidon Copolymerisate mit besonders einheitlicher Teilchengrößenverteilung.

Die feinteiligen, agglomerierten, wasserlöslichen Polymerisate werden als Flockungsmittel, z.B. zum Flocken von Klärschlamm, kommunalen und industriellen Abwässern, sowie als Flockungsmittel bei der Herstellung von Papier verwendet. Sie sind außerdem als Retentions- und Entwässerungsmittel bei der Papierherstellung einsetzbar. Die agglomerierten wasserlöslichen und wasserquellbaren Polymerteilchen zerfallen beim Einbringen in Wasser in die Primärteilchen die sich rasch in Wasser auflösen. Die wasserlöslichen Polymerisate haben K-Werte von 150 bis 300 (bestimmt nach H. Fikentscher in 0,5 %iger wäßriger Lösung bei pH 7 und 25°C). Die Prozentangaben in den Beispielen sind Gewichtsprozente. Die K-Werte der Polymeren wurden nach H. Fikentscher, Cellulosechemie, Band 13, 58 bis 64 und 71 bis 74 (1932) bei einer Temperatur von 25°C und einer Polymerkonzentration von 0,5 % in wäßriger Lösung bestimmt. Die Teilchengrößen der agglomerierten Teilchen wurden durch Siebanalysen ermittelt, während die Teilchengrößen der Primärteilchen der Wasser-in-Öl-Polymeremulsionen mit Hilfe von Rasterelektronenmikroskop-Aufnahmen ermittelt wurden.

### Beispiele

### Herstellung der Wasser-in-Öl-Polymeremulsionen

### Allgemeine Durchführung

Nach dem in der DE-A-36 41 700 beschriebenen Verfahren werden in einem 2 l fassendem Polymerisationsbehälter, der mit Ankerrührer, Thermometer, Stickstoffeinlaß- und -auslaß versehen ist, die jeweils nachstehend beschriebenen Monomeremulsionen vorgelegt. Die polymerisierbare Mischung wird dann unter Zugabe von 0,054 g 2,2-Azobis(2-Aminopropan)dihydrochlorid 30 Minuten bei Raumtemperatur unter Stickstoffatmosphäre bei einer Rührgeschwindigkeit von 200 Umdrehungen pro Minute emulgiert. Das Gemisch wird dann auf 55 bis 60°C erwärmt und in diesem Temperaturbereich innerhalb von 1,5 h polymerisiert. Nach Zugabe von weiteren 0,054 g 2,2-Azobis(2-Aminopropan)dihydrochlorid wird das Reaktionsgemisch nach 2 h bei 65°C nachpolymerisiert. Der mittlere Teilchendurchmesser der Primärteilchen der jeweils erhaltenen Wasser-in-Öl-Polymeremulsionen lag in dem Bereich von 1 bis 5 µm.

### W/O-Polymerisat 1

Zusammensetzung der Monomeremulsion
- 250 g: Cyclohexan
- 20 g: eines Wasser-in-Öl-Emulgators, der erhältlich ist durch Umsetzung von
(A) Oleylalkohol mit Epichlorhydrin im Molverhältnis 1 : 1 zu Oleylglycidylether,
(B) Reaktion des Oleylglycidylethers mit Glycerin im Molverhältnis 1 : 1 in Gegenwart von BF₃-Phosphorsäure bei einer Temperatur von 80°C und Entfernen des Katalysators mit Hilfe eines basischen Ionenaustauschers und
(C) Ethoxylierung des Reaktionsprodukts gemäß (B) mit 2 mol Ethylenoxid,
- 3 g: eines Tensids, das durch Umsetzung eines C₁₃-C₁₅-Oxoalkohols mit 6 mol Ethylenoxid und 4 mol Propylenoxid erhältlich ist und einen Trübungspunkt von 32°C in Wasser und eine Viskosität von 65 mPas bei 23°C hat,
- 175 g: Acrylsäure
- 15 g: Acrylamid
- 0,427 g: Ameisensäure
- 0,089 g: Pentanatriumsalz der Diethylentriaminpentaessigsäure
- 0,043 g: Methylenbisacrylamid.

Zur Herstellung der Monomeremulsion wird zunächst Acrylsäure im Polymerisationsbehälter vorgelegt und durch Zugabe von wäßriger Kalilauge auf einen pH-Wert von 7 neutralisiert. Anschließend fügt man die weiteren Komponenten zu und soviel Kalilauge, daß sich ein pH-Wert von 8 einstellt. Man gibt dann soviel Wasser zu, daß der Gesamtansatz der Monomeremulsion 1000 g beträgt, emulgiert und polymerisiert wie oben beschrieben.

### W/O-Polymerisat 2

Man verfährt wie bei der Herstellung von W/O-Polymerisat 1 beschrieben, verwendet jedoch anstelle von Acrylsäure und Acrylamid jetzt 200 g Acrylsäure als Monomer.

### W/O-Polymerisat 3

Man verfährt wie bei der Herstellung von W/O-Polymerisat 1 beschrieben, verwendet jedoch als Monomeremulsion 200 g Acrylsäure und neutralisiert die Acrylsäure anstelle mit Kalilauge jetzt mit Natronlauge.

### W/O-Polymerisat 4

Zu der unter W/O-Polymerisat 1 beschriebenen Monomeremulsion fügt man noch 25 g N-Vinylpyrrolidion zu.

### W/O-Polymerisat 5

Man verfährt wie bei der Herstellung des W/O-Polymerisat 1 jedoch mit den Ausnahmen, daß man zur Monomeremulsion noch 25 g N-Vinylpyrrolidon zufügt und zum Neutralisieren anstelle von KOH jetzt Natronlauge verwendet.

### W/O-Polymerisat 6

Man verfährt wie bei der Herstellung des W/O-Polymerisat 1 beschrieben, jedoch mit den Ausnahmen, daß man zur Monomeremulsion noch 25 g N-Vinylpyrrolidon zufügt und auf den Einsatz des Tensids verzichtet und die Neutralisation der Acrylsäure mit Natronlauge vornimmt.

### W/O-Polymerisat 7

Man verfährt wie bei der Herstellung des W/O-Polymerisat 1 beschrieben, jedoch mit der Ausnahme, daß man Acrylamid durch 25 g N-Vinylpyrrolidon ersetzt.

### W/O-Polymerisat 8

Man verfährt wie bei der Herstellung des W/O-Polymerisat 1 beschrieben, jedoch mit den Ausnahmen, daß die Monomeremulsion noch zusätzlich 25 g N-Vinylpyrrolidon enthält und daß auf den Einsatz des Tensids verzichtet wird.

### W/O-Polymerisat 9

Handelsübliche Wasser-in-Öl-Polymeremulsion eines wasserquellbaren Copolymerisats aus Ammoniumacrylat und Acrylamid mit einem Polymergehalt von 22,5 % und einer mittleren Teilchengröße der dispergierten Primärteilchen von ca. 0,5 µm.

### Beispiel 1

500 g des oben beschriebenen W/O-Polymerisat 1 werden in einem 2 l Glaskolben, der mit einem Thermometer, einem Ankerrührer und einem Wasserabscheider ausgestattet ist, zusammen mit 350 ml Cyclohexan und 10 g Polyethylenglykol der mittleren molaren Masse von 300 vorgelegt und mit einer Drehzahl von 300 Umdrehungen pro Minute gerührt. Der Kolbeninhalt wird dann auf eine Temperatur in dem Bereich von 70 bis 80°C aufgeheizt und Wasser azeotrop abdestilliert. Die azeotrope Destillation ist nach etwa 5 h beendet. Die so erhältliche Polymersuspension setzt sich rasch ab, wird abfiltriert und im Vakuumtrockenschrank bei 50°C getrocknet. Man erhält ein farbloses, nicht staubendes, rieselfähiges Polymerisat, dessen Siebanalyse in Tabelle 1 angegeben ist.

### Beispiel 2

Beispiel 1 wird mit der einzigen Ausnahme wiederholt, daß man jetzt als Agglomerationshilfsmittel eine Polyethylenglykol mit der mittleren molaren Masse von 4000 einsetzt. Man erhält auch hier ein leicht filtrierbares,
farbloses, nichtstaubendes Polymerpulver.

### Beispiel 3

Beispiel 1 wird mit der einzigen Ausnahme wiederholt, daß man als Agglomerationshilfsmittel Polypropylenglykol mit einer mittleren molaren Masse von 600 einsetzt. Man erhält ein farbloses, nichtstaubendes agglomeriertes Polymerisat, dessen Siebanalyse in Tabelle 1 angegeben ist.

### Beispiel 4

Beispiel 1 wird mit der einzigen Ausnahme wiederholt, daß man als Agglomerationshilfsmittel ein Anlagerungsprodukt von sukzessive Propylenoxid und Ethylenoxid an Ethylendiamin verwendet. Molekulargewicht ca. 16.000.

### Vergleichsbeispiel 1

Beispiel 1 wird mit der einzigen Ausnahme wiederholt, daß man anstelle von Polyethylenglykol der mittleren molaren Masse von 300 jetzt Sorbitanmonooleat einsetzt. Die Filtration dauert relativ lange und ist unvollständig. Das Filtrat ist milchig weiß. Das erhaltene pulverförmige Produkt staubt sehr stark.

### Vergleichsbeispiel 2

Das Beispiel 1 wird mit der Ausnahme wiederholt, daß man anstelle des Polyethylenglykols mit mittlerer molarer Masse von 300 55 g einer 17,7 %igen Lösung des Schutzkolloids 1 einsetzt, das bei der umgekehrten Suspensionspolymerisation Anwendung findet.

Das Schutzkolloid 1 wurde folgendermaßen hergestellt:

In einer Polymerisationsapparatur, die aus einem Reaktionsgefäß bestand, das mit einem Rückflußkühler, Thermometer, einer Heizung und einer Kühlvorrichtung, einem Rührer, Zulaufgefäßen und für das Arbeiten unter Inertgasatmosphäre ausgerüstet war, wurde eine Mischung aus folgenden Bestandteilen vorgelegt und zum Sieden unter Rückfluß erhitzt:
- 1700 g: eines Polymeren, das durch kontinuierliches Polymerisieren einer Monomermischung aus 83 % Styrol und 17 % Methacrylsäure bei einer Temperatur von 249 bis 251°C bei einem Druck von 24 mbar hergestellt wurde, ein Molekulargewicht von 1870, eine Säurezahl von 104 mg KOH/g, eine Hydrieriodzahl von 14 g pro 100 g Polymer und einen Erweichungspunkt von 138°C hatte,
- 532 g: Maleinsäureanhydrid,
- 1600 g: Cyclohexan,
- 2470 g: tert.-Butylacrylat und
- 65 g: tert.-Butylperpivalat.

Innerhalb von 2 Stunden nach Beginn des Rückflußfließsiedens gab man jeweils eine Lösung von 4730 g tert.-Butylacrylat und 568 g Styrol in 1766 g Cyclohexan zu und gleichzeitig damit eine Lösung von 260 g tert.-Butylperpivalat in 833 g Cyclohexan. Nach der vollständigen Dosierung der Monomeren und des Polymerisationsinitiators wurde das Reaktionsgemisch noch 2 Stunden beim Rückflußsieden gerührt und danach mit Cyclohexan verdünnt. Man erhielt eine Schutzkolloid-Dispersion mit einem Polymergehalt von 17,7 %. Das Pfropfcopolymerisat hatte einen K-Wert von 32.

Die bei der Entwässerung erhaltene Polymersuspension ließ sich nicht innerhalb von 120 Minuten filtrieren (Papierfilter, Fa. Schleicher & Schüll, mittelweitporig). Zur Aufarbeitung der entwässerten Wasser-in-Öl-Polymeremulsion ließ man das entwässerte Produkt über Nacht stehen und dekantierte am anderen Morgen das Sediment ab und trocknete es. Man erhielt ein sehr stark staubendes Pulver.

### Beispiel 5

Beispiel 1 wurde mit den Ausnahmen wiederholt, daß man jetzt das W/O-Polymerisat 2 einsetzte und bei 200 Upm entwässerte. Man erhielt nach dem azeotropen Trocknen eine Polymersuspension, die sich rasch absetzte und innerhalb von 1 Minute vollständig filtriert werden konnte. Die Siebanalyse des agglomerierten Polymerisats ist in Tabelle 1 angegeben.

### Beispiel 6

Beispiel 1 wurde mit der Ausnahme wiederholt, daß man das W/O-Polymerisat 3 einsetzte und bei 200 Upm entwässerte. Nach der azeotropen Entwässerung erhielt man eine rasch sedimentierende Polymersuspension, die innerhalb von 1 Minute vollständig filtriert werden konnte. Nach dem Trocknen lag ein farbloses, nichtstaubendes Pulver vor, dessen Siebanalyse in Tabelle 1 angegeben ist.

### Beispiel 7

Beispiel 1 wurde mit der Ausnahme wiederholt, daß man das W/O-Polymerisat 4 azeotrop bei 200 Upm entwässerte. Man erhielt auch hier wiederum eine rasch sedimentierende, gut filtrierbare Polymersuspension, aus der ein farbloses, nichtstaubendes Pulver gewonnen wurde. Die Siebanalyse ist in Tabelle 1 angegeben. Die Schüttdichte des Produkts beträgt 0,60 g/cm³.

### Beispiel 8

Beispiel 7 wurde mit der Ausnahme wiederholt, daß anstelle des dort verwendeten Agglomerationsmittels jetzt ein Blockcopolymerisat aus Ethylenoxid-Propylenoxid-Ethylenoxid-Blöcken mit einer mittleren molaren Masse von 2600 und einer Viskosität von 600 mPas (25°C) eingesetzt wurde. Nach dem azeotropen Abdestillieren des Wassers lag eine rasch sedimentierende Polymersuspension vor, aus der ein farbloses, nichtstaubendes Pulver mit der in Tabelle 1 angegebenen Siebanalyse erhalten wurde.

### Beispiel 9

Das Beispiel 7 wurde mit der Ausnahme wiederholt, daß man als Agglomerationshilfsmittel jetzt ein Blockcopolymerisat aus Propylenoxid-Ethylenoxid-Propylenoxid-Blöcken der mittleren molaren Masse von 2800 und einer Viskosität von 675 mPas (25°C) einsetzte. Nach dem azeotropen Trocknen lag eine rasch sedimentierende Polymersuspension vor, aus der ein farbloses, nichtstaubendes Pulver mit der in Tabelle 1 angegeben Teilchengrößenverteilung erhalten wurde.

### Beispiel 10

Beispiel 1 wurde mit der Ausnahme wiederholt, daß man das W/O-Polymerisat 5 einsetzte und bei 200 Upm entwässerte. Man erhielt nach dem azeotropen Tocknen eine rasch sedimentierende Polymersuspension, aus der ein farbloses, nichtstaubendes Pulver mit der in Tabelle 1 angegeben Teilchengrößenverteilung erhalten wurde.

### Beispiel 11

Beispiel 1 wurde mit den Ausnahmen wiederholt, daß man jetzt das W/O-Polymerisat 6 anstelle des dort verwendeten einsetzte und bei 200 Upm entwässerte. Nach dem azeotropen Entwässern lag eine rasch sedimentierende gut filtrierbare Polymersuspension vor, aus der ein farbloses, nichtstaubendes Pulver der in Tabelle 1 angegeben Teilchengrößenverteilung erhalten wurde.

### Beispiel 12

Beispiel 1 wurde mit der einzigen Ausnahme wiederholt, daß man anstelle des dort genannten Polymerisats jetzt das W/O-Polymerisat 7 einsetzte. Nach der azeotropen Entwässerung lag eine rasch sedimentierende Polymersuspension vor, die gut filtrierbar war und aus der ein farbloses, nichtstaubendes pulverförmiges Polymer mit der in Tabelle 1 angegeben Teilchengrößenverteiltung erhalten wurde.

### Beispiel 13

Beispiel 1 wurde mit den Ausnahmen wiederholt, daß man anstelle des dort verwendeten Polymerisats jetzt das W/O-Polymerisat 8 einsetzte, zusätzlich noch 500 g Cyclohexan zufügte und die Entwässerung bei einer Drehzahl von 500 Umdrehungen innerhalb von 3 h durchführte. Man erhielt eine rasch sedimentierende Polymersuspension, aus der mit Hilfe einer Filtration ein farbloses, nichtstaubendes Polymerisat der in Tabelle 1 angegeben Zusammensetzung erhalten wurde.

### Beispiel 14

Beispiel 13 wurde mit der Ausnahme wiederholt, daß man als Agglomerationshilfsmittel 20 g eines Blockcopolymerisates aus Ethylenoxid-Propylenoxid-Ethylenoxid-Blöcken der mittleren molaren Masse von 4600 und einem Erstarrungspunkt von 25°C einsetzte. Man erhielt eine rasch sedimentierende Polymersuspension, aus der ein farbloses, nichtstaubendes Polymerpulver der in Tabelle 1 angegeben Teilchengrößenverteilung erhalten wurde.

### Beispiel 15

Beispiel 1 wurde mit den Ausnahmen wiederholt, daß man anstelle des dort eingesetzten Polymerisats jetzt das W/O-Polymerisat 9 einsetzte, dieses mit 500 g Cyclohexan verdünnte, zusätzlich 10 g des im Vergleichsbeispiel 2 beschriebenen Schutzkolloids für die umgekehrte Suspensionspolymerisation zusetzte und bei 200 Upm entwässerte. Man erhielt ein farbloses, nichtstaubendes Polymerpulver, das die in Tabelle 1 angegeben Teilchengrößenverteilung aufwies.

### Vergleichsbeispiel 3

Das W/O-Polymerisat 9 wurde mit 500 g Cyclohexan versetzt und ohne weitere Zusätze einer azeotropen Destillation unterworfen. Hierbei koagulierte die Wasser-in-Öl-Polymeremulsion. Der Rührer blieb stehen.

### Vergleichsbeispiel 4

500 g des W/O-Polymerisat 9 wurden mit 500 g Cyclohexan und 20 g der im Vergleichsbeispiel 2 beschriebenen 17,7 %igen Lösung des Schutzkolloids 1 für die umgekehrte Suspensionspolymerisation in Cyclohexan versetzt und innerhalb von 4 h azeotrop entwässert. Die nach dem azeotropen Entwässern erhaltene Polymersuspension war äußert schwer filtrierbar. Der Versuch der Filtration über ein Papierfilter der Fa. Schleicher & Schüll, mittelweitporig, wurde nach 2 h abgebrochen, da das Filter verstopfte. Andererseits lief die Dispersion praktisch rückstandsfrei durch ein 100 µm Filter aus Perlon. Man ließ die entwässerte Polymersuspension deshalb über Nacht stehen und dekantierte am anderen Morgen ab und trocknete den Rückstand im Vakuum. Man erhielt auf diese Weise ein extrem stark staubendes Pulver.

### Beispiel 16

Beispiel 1 wird mit den Ausnahmen wiederholt, daß man anstelle des dort verwendeten Polymerisats jetzt 300 g der Polymeremulsion EM 430 der Fa. Floerger einsetzt und diese mit 450 g Cyclohexan verdünnt. Nachdem durch azeotrope Entwässerung 116 g Wasser anfielen, erhielt man ein farbloses, rieselfähiges und nichtstaubendes Pulver. Die Schüttdichte beträgt 0,17 g/cm³.

**Tabelle 1**

| Siebanalysen der agglomerierten Polymerteilchen | | | | | | | | | | | |
|---|---|---|---|---|---|---|---|---|---|---|---|
| Beispiel | **Siebboden** (µm) | | | | | | | | | | |
| | 0 | 100 | 160 | 315 | 500 | 800 | 1000 | 1400 | 2500 | 4000 | 6300 |
| 1 | 0 | 1 | 3 | 6 | 19 | 7 | 10 | 21 | 28 | 5 | 0 |
| 2 | 1 | 0 | 5 | 25 | 11 | 1 | 24 | - | 30 | 3 | 0 |
| 3 | 0 | 0 | 1 | 8 | 46 | 4 | 16 | - | 19 | 4 | 1 |
| 4 | 0 | 0 | 1 | 12 | 49 | 16 | 13 | 7 | 1 | 1 | 0 |
| 5 | 0 | 1 | 5 | 13 | 36 | - | 1 | 11 | 23 | 10 | 0 |
| 6 | 0 | 0 | 1 | 5 | 45 | - | 13 | 14 | 16 | 5 | 2 |
| 7 | 0 | 11 | 75 | 6 | 1 | 0 | 7 | - | - | - | - |
| 8 | 0 | 1 | 2 | 8 | 72 | 5 | 12 | - | - | - | - |
| 9 | 0 | 1 | 49 | 30 | 4 | 1 | 15 | - | - | - | - |
| 10 | 0 | 43 | 42 | 3 | 3 | - | 2 | 5 | 2 | 0 | 0 |
| 11 | 1 | 18 | 70 | 2 | 2 | 0 | 1 | 6 | - | - | - |
| 12 | 0 | 8 | 77 | 2 | 3 | - | 2 | 4 | 3 | 1 | 0 |
| 13 | 4 | 52 | 38 | 1 | 2 | 1 | 1 | 1 | - | - | - |
| 14 | 1 | 1 | 7 | 52 | 35 | 0 | 1 | 3 | - | - | - |
| 15 | 0 | 1 | 14 | 18 | 37 | 3 | 4 | 11 | 11 | 1 | 0 |
| 16 | 3 | 18 | 52 | 10 | 6 | 1 | 1 | 3 | 3 | 2 | 1 |
| | | | | | | | | | | | |
| Vgl. bsp. | | | | | | | | | | | |
| 1 | 82 | 11 | 2 | 1 | 1 | 1 | 1 | 1 | - | - | - |
| 2 | 85 | 3 | 4 | 2 | 2 | 2 | 1 | 1 | 0 | 0 | 0 |

Die gemäß den Beispielen 1 bis 16 erhaltenen Polymerteilchen zerfallen beim Eintragen in Wasser in die Primärteilchen, die stark quellen, so daß man strukturlose Gele erhält.

### Beispiel 17

- 40 g: des gemäß Beispiel 1 hergestellten pulverförmigen Polymerisats werden in
- 795 g: destilliertes Wasser unter Rühren eingestreut. Das Polymerisat läßt sich gut verteilen und klumpt nicht zusammen. Dann wird drei Minuten bei 12.000 Umdrehungen pro Minuten mit einem Schnellrührer gerührt. Man erhält eine glatte Paste. Anschließend fügt man unter Rühren nacheinander
- 120 g: Harnstoff,
- 25 g: Soda,
- 10 g: des Natriumsalzes der m-Nitrobenzolsulfonsäure und
- 10 g: des pulverförmigen blauen Reaktivfarbstoffs der Colour Index Nr. 61 205 zu und homogenisiert 3 Minuten bei 10.000 Umdrehungen pro Minute.

Die erhaltene Druckpaste wird mit einer Flachfilmdruckmaschine auf ein Baumwollgewebe gedruckt. Anschließend trocknet man 2 Minuten bei 110°C und unterzieht die bedruckte Ware 10 Minuten bei 102°C einer Sattdampffixierung. Die Ware wird anschließend nacheinander mit Wasser von 20°C und Wasser von 60°C gespült und mit einer Waschflotte, die 2 g/l eines Anlagerungsprodukts von 8 Mol Ethylenoxid an Nonylphenol enthält, gekocht. Nach erneutem Spülen bei 20°C wird die Ware getrocknet. Man erhält einen sehr farbstarken, egalen, konturenscharfen und weichen blauen Druck.

### Beispiel 18

- 30 g: des gemäß Beispiel 5 hergestellten pulverförmigen Polymerisats werden unter Rühren in
- 940 g: Wasser von 15°dH eingestreut. Das Polymerisat läßt sich ohne Bildung von Klumpen verteilen und beginnt rasch zu quellen. Anschließend fügt man
- 30 g: des blauen Dispersionsfarbstoffs der Formel 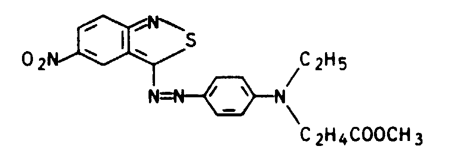 in der flüssigen, nichtionogen gefinishten Handelsform zu und rührt den Ansatz drei Minuten mit einem Schnellrührer bei 10.000 Umdrehungen pro Minute.

Die so erhaltene Druckpaste wird mit Hilfe einer Flachfilmdruckschablone auf eine Polyester-Wirkware gedruckt. Der Druck wird 3 Minuten bei 100°C getrocknet und 10 Minuten bei 170°C einer Heißdampffixierung unterworfen. Man erhält einen farbstarken blauen Druck mit guter Egalität, gutem Konturenstand und weichem Griff.

### Beispiel 19

- 25 g: des gemäß Beispiel 6 hergestellten Polymerisats werden Rühren eingestreut in eine Mischung aus
- 831 g: Trinkwasser,
- 4 g: einer 25 %igen Ammoniaklösung,
- 10 g: eines handelsüblichen Fixierers auf Basis eines Hexamethoxymethylmelamins und
- 120 g: eines handelsüblichen Bindemittels auf Basis einer 45 %igen Copolymerisatdispersion aus Butylacrylat, Styrol und N-Methylolmethacrylamid. Das Polymerisat verteilt sich ohne zusammenzuklumpen in der wäßrigen Zubereitung und beginnt rasch zu quellen. Der Ansatz wird vier Minuten mit einem Schnellrührer bei 10.000 Umdrehungen pro Minute gerührt. Danach gibt man
- 10 g: des roten Pigmentfarbstoffs der Colour Index Nr. 12 485 zu und rührt nochmals eine Minute bei 5.000 Umdrehungen pro Minute.

Die erhaltene Druckpaste wird anschließend mit Hilfe einer Flachfilmdruckschablone auf ein Mischgewebe aus 65 % Polyester und 35 % Baumwolle gedruckt. Dann wird 2 Minuten bei 100°C getrocknet und 5 Minuten bei 150°C mit Heißluft fixiert. Man erhält einen blauen, farbstarken, brillantroten Druck mit guter Egalität, scharfen Konturen, weichem Griff und guten Reib- und Trockenreinigungsechtheiten.

### Beispiel 20

- 4,5 g: des gemäß Beispiel 7 hergestellten pulverförmigen Polymerisats werden unter Rühren in
- 5 g: eines handelsüblichen Emulgators auf Basis eines Alkylpolyglykolethers in
- 530,5 g: Trinkwasser eingestreut. Der Ansatz beginnt bereits nach wenigen Sekunden zu verdicken. Anschließend wird zwei Minuten mit einem Schnellrührer bei 8.000 Umdrehungen gerührt. In den homogenen, viskosen Ansatz werden unter Rühren bei 8.000 Umdrehungen pro Minute innerhalb einer Minute
- 300 g: Benzin einemulgiert. Dann rührt man nochmals eine Minute bei 10.000 Umdrehungen pro Minute und fügt
- 120 g: eines handelsüblichen Bindemittels auf Basis einer 45%igen wäßrigen Copolymerisatdispersion aus Butadien, Styrol, Acrylnitril und N-Methylolmethacrylamid sowie
- 30 Teile: des roten Pigmentfarbstoffs der Colour Index Nr. 12475 zu. Das Gemisch wird nochmals zwei Minuten bei 10.000 Umdrehungen pro Minute gerührt.

Die erhaltene Druckpaste wird dann mit Hilfe einer Rouleauxdruckmaschine auf ein Baumwollgewebe gedruckt. Der Druck wird 3 Minuten bei 100°C getrocknet und 5 Minuten bei 150°C mit Heißluft fixiert. Man erhält einen brillanten, farbstarken, egalen, konturenscharfen roten Druck mit weichem Griff und guten Reib- und Naßechtheiten.

### Beispiel 21

- 40 g: des gemäß Beispiel 10 hergestellten pulverförmigen Polymerisats werden in eine Mischung aus
- 560 g: Trinkwasser,
- 150 g: Kaliumcarbonat,
- 25 g: Thiodiglykol,
- 25 g: Glycerin,
- 150 g: des Natriumsalzes der Hydroximethansulfinsure (vorliegend als Dihydrat) und
- 50 g: der flüssigen Handelsform des roten Küpenfarbstoffs mit der C.I. Nr. 67 000 eingestreut.

Das pulverförmige Polymerisat verteilt sich klumpenfrei und beginnt bereits nach wenigen Sekunden zu verdicken. Anschließend rührt man 4 Minuten mit einem Schnellrührer bei 10.000 Umdrehungen. Die erhaltene Druckpaste wird mit einer Flachfilmdruckmaschine auf ein Baumwollgewebe gedruckt. Anschließend trocknet man 2 Minuten bei 100°C und unterzieht die bedruckte Ware 15 Minuten bei 102°C einer Sattdampffixierung.

Anschließend wird mit Wasser von 20°C gespült, dann gibt man das Textilgut in eine 60°C warme Waschflotte, die 2 g/l 30 %iges Wasserstoffperoxid enthält. Nach einer Verweilzeit von 2 Minuten wird die Ware erneut mit Wasser von 20°C gespült und anschließend mit einer Waschflotte gekocht, die 1 g/l eines Anlagerungsproduktes von 8 Mol Ethylenoxid an Nonylphenol enthält. Nach nochmaligem Spülen bei 20°C wird die Ware getrocknet. Man erhält einen egalen, konturenscharfen und weichen roten Druck.

### Beispiel 22

- 40 g: des gemäß Beispiel 11 hergestellten pulverförmigen Polymerisats werden unter Rühren in
- 930 g: Wasser von 15°dH eingestreut. Anschließend fügt man
- 30 g: des blauen Dispersionsfarbstoffs der Formel 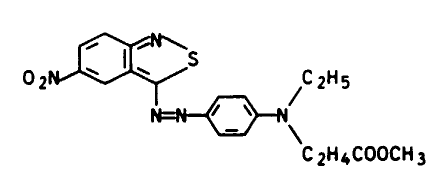 in der flüssigen, nichtionogen gefinishten Handelsform zu und rührt den Ansatz drei Minuten mit einem Schnellrührer bei 10.000 Umdrehungen pro Minute.

Die so erhaltene Druckpaste wird mit Hilfe einer Flachfilmdruckschablone auf eine Polyester-Wirkware gedruckt. Der Druck wird 3 Minuten bei 100°C getrocknet und 10 Minuten bei 170°C einer Heißdampffixierung unterworfen.

Danach wird das Gewebe bei 20°C gespült und anschließend mit einer 60°C warmen Lösung gewaschen, die 1 g/l eines Anlagerungsproduktes von 8 Mol Ethylenoxid an Nonylphenol, 1 g/l 50 %ige Natronlauge und 2 g/l Natriumdithionit enthält. Dann wird nochmals bei 20°C gespült und getrocknet. Man erhält einen farbstarken blauen Druck mit guter Egalität, gutem Konturenstand, sehr weichem Griff und guten Reib- und Waschechtheiten.

### Beispiel 23

Beispiel 17 wird mit der Ausnahme wiederholt, daß anstelle des dort angegebenen Verdickungsmittels 36 g des gemäß Beispiel 12 hergestellten Polymerisats eingesetzt werden. Man erhält einen farbstarken, egalen und konturenscharfen blauen Druck.

### Beispiel 24

Beispiel 18 wird wiederholt mit der Ausnahme, daß statt des dort angegebenen Verdickungsmittels 38 g des gemäß Beispiel 13 hergestellten Polymerisats verwendet werden. Es resultiert ein farbstarker blauer Druck mit guter Egalität und gutem Konturenstand.

## Patentansprüche

1. Nicht-staubendes Pulver agglomerierter Polymerteilchen aus wasserlöslichen oder wasserquellbaren Polymerisaten mit einem mittleren Teilchendurchmesser von 20 bis 5000 µm, dadurch gekennzeichnet, daß sie aus Primärteilchen mit einem mittleren Teilchendurchmesser von 0,1 bis 15 µm bestehen, die durch Polymerisieren von wasserlöslichen Monomeren, gegebenenfalls in Gegenwart von Vernetzungsmitteln, nach Art einer Wasser-in-Öl-Polymerisation erhältlich sind und durch azeotropes Entwässern der die Primärteilchen enthaltenden Wasser-in-Öl-Polymeremulsion in Gegenwart von agglomerierend wirkenden Polyalkylenglykolen, die mindestens 2 Alkylenoxid-Einheiten einpolymerisiert enthalten, und die ausgewählt sind aus der Gruppe der Polyethylenglykole, Polypropylenglykole, Blockcopolymerisate aus Ethylenoxid und Propylenoxid, ein- oder beidseitig mit C₁- bis C₄-Alkoholen veretherten Polyethylenglykole und Anlagerungsprodukte von Ethylenoxid und Propylenoxid an Ethylendiamin und daß die agglomerierten Polymerteilchen beim Eintragen in ein wäßriges Medium in die Primärteilchen zerfallen.

2. Verfahren zur Herstellung von feinteiligen, wasserlöslichen oder wasserquellbaren Polymerisaten durch Isolieren der Polymerteilchen aus Wasser-in-Öl-Emulsionen von wasserlöslichen oder wasserquellbaren Polymerisaten nach Anspruch 1, dadurch gekennzeichnet, daß man die Wasser-in-Öl-Polymeremulsionen in Gegenwart von 1 bis 40 Gew.%, bezogen auf die Polymeren, an agglomerierend wirkenden Polyalkylenglykolen, die mindestens 2 Alkylenoxid-Einheiten einpolymerisiert enthalten, und die ausgewählt sind aus der Gruppe der Polyethylenglykole, Polypropylenglykole, Blockcopolymerisate aus Ethylenoxid und Propylenoxid, ein- oder beidseitig mit C₁- bis C₄-Alkoholen veretherten Polyethylenglykole und Anlagerungsprodukte von Ethylenoxid und Propylenoxid an Ethylendiamin azeotrop unter Agglomeration der Primärteilchen der Polymeremulsionen entwässert und die agglomerierten Polymerteilchen isoliert.

3. Verfahren nach Anspruch 2, dadurch gekennzeichnet, daß die wasserlöslichen Polymerisate erhältlich sind durch Polymerisieren von wasserlöslichen Monomeren aus der Gruppe von monoethylenisch ungesättigten C₃- bis C₆-Carbonsäuren, Acrylamid, Methacrylamid, N-Vinylpyrrolidon, 2-Acrylamido-2-methylpropansulfonsäure, Vinylsulfonsäure, Dimethylaminoethylacrylat und Diethylaminoethylacrylat in der wäßrigen Phase einer Wasser-in-Öl-Emulsion in Gegenwart von Wasser-in-Öl-Emulgatoren und Polymerisationsinitiatoren.

4. Verfahren nach Anspruch 2, dadurch gekennzeichnet, daß die wasserquellbaren Polymerisate erhältlich sind durch Polymerisieren von wasserlöslichen monoethylenisch ungesättigten Monomeren in Gegenwart von 50 bis 5000 ppm eines mindestens zwei ethylenisch ungesättigte, nicht konjugierte Doppelbindungen enthaltenden Monomeren als Vernetzer in der wäßrigen Phase einer Wasser-in-Öl-Emulsion in Gegenwart von Wasser-in-Öl-Emulgatoren und Polymerisationsinitiatoren.

5. Verfahren nach Anspruch 4, dadurch gekennzeichnet, daß die wasserquellbaren Polymerisate als wesentliche wasserlösliche monoethylenisch ungesättigte Monomere Acrylsäure, Acrylamid und N-Vinylpyrrolidon einpolymerisiert enthalten.

6. Verwendung von feinteiligen, agglomerierten, wasserlöslichen Polymerisaten nach Anspruch 1 als Flockungsmittel, Retentions- und Entwässerungsmittel.

7. Verwendung von feinteiligen, agglomerierten, wasserquellbaren Polymerisaten nach Anspruch 1 als Verdickungsmittel zur Erhöhung der Viskosität wäßriger Systeme.

8. Verwendung nach Anspruch 7, dadurch gekennzeichnet, daß die wasserquellbaren Polymerisate als Verdickungsmittel für Druckpasten zum Bedrucken von Textilien eingesetzt werden.

## Claims

1. A nondusting powder of agglomerated polymer particles composed of a water-soluble or water-swellable polymer having a mean particle diameter of from 20 to 5000 µm, which consists of primary particles which have a mean particle diameter of from 0.1 to 15 µm and are obtainable by polymerizing water-soluble monomers in the presence or absence of crosslinking agents by a water-in-oil polymerization method, and can be prepared by azeotropically dewatering the water-in-oil polymer emulsion containing the primary particles in the presence of a polyalkylene glycol which has an agglomerating effect and which contains not less than 2 polymerized alkylene oxide units and is selected from the group consisting of polyethylene glycols, polypropylene glycols, block copolymers of ethylene oxide and propylene oxide, polyethylene glycols etherified at one or both ends with C₁-C₄-alcohols and adducts of ethylene oxide and propylene oxide with ethylenediamine, and wherein the agglomerated polymer particles disintegrate into the primary particles when introduced into an aqueous medium.

2. A process for the preparation of a finely divided, water-soluble or water-swellable polymer by isolating the polymer particles from a water-in-oil emulsion of a water-soluble or water-swellable polymer as claimed in claim 1, wherein the water-in-oil polymer emulsion is azeotropically dewatered in the presence of from 1 to 40% by weight, based on the polymer, of a polyalkylene glycol which has an agglomerating effect and which contains not less than 2 polymerized alkylene oxide units and is selected from the group consisting of polyethylene glycols, polypropylene glycols, block copolymers of ethylene oxide and propylene oxide, polyethylene glycols etherified at one or both ends with C₁-C₄-alcohols and adducts of ethylene oxide and propylene oxide with ethylenediamine, with agglomeration of the primary particles of the polymer emulsion, and the agglomerated polymer particles are isolated.

3. A process as claimed in claim 2, wherein the water-soluble polymer is obtainable by polymerizing water-soluble monomers from the group consisting of monoethylenically unsaturated C₃-C₆-carboxylic acids, acrylamide, methacrylamide, N-vinylpyrrolidone, 2-acrylamido-2-methylpropanesulfonic acid, vinylsulfonic acid, dimethylaminoethyl acrylate and diethylaminoethyl acrylate in the aqueous phase of a water-in-oil emulsion in the presence of a water-in-oil emulsifier and a polymerization initiator.

4. A process as claimed in claim 2, wherein the water-swellable polymer is obtainable by polymerizing water-soluble monoethylenically unsaturated monomers in the presence of from 50 to 5,000 ppm of a monomer containing two or more ethylenically unsaturated, nonconjugated double bonds, as a crosslinking agent, in the aqueous phase of a water-in-oil emulsion in the presence of a water-in-oil emulsifier and a polymerization initiator.

5. A process as claimed in claim 4, wherein the water-swellable polymer contains acrylic acid, acrylamide and N-vinylpyrrolidone as essential polymerized water-soluble monoethylenically unsaturated monomers.

6. Use of a finely divided, agglomerated, water-soluble polymer as claimed in claim 1 as a flocculant or retention or drainage aid.

7. Use of a finely divided, agglomerated, water-swellable polymer as claimed in claim 1 as a thickener for increasing the viscosity of aqueous systems.

8. Use as claimed in claim 7, wherein the water-swellable polymer is employed as a thickener for print pastes for printing textiles.

## Revendications

1. Poudre ne dégageant pas de poussière, composée de particules agglomérées de polymères hydrosolubles ou gonflant dans l'eau ayant un diamètre moyen de 20 à 5000 µm, caractérisée en ce que les particules agglomérées se composent de particules primaires ayant un diamètre moyen de 0,1 à 15 µm qui sont obtenues par polymérisation de monomères hydrosolubles, éventuellement en présence de réticulants, à la manière d'une polymérisation eau-dans-huile, et par déshydratation azéotrope de l'émulsion de polymère eau-dans-huile contenant les particules primaires, en présence de polyalkylèneglycols à effet agglomérant qui contiennent au moins 2 motifs oxyde d'alkylène en liaison polymère et qui sont choisis dans le groupe des polyéthylèneglycols, des polypropylèneglycols, des copolymères séquencés d'oxyde d'éthylène et d'oxyde de propylène, des polyéthylèneglycols éthérifiés d'un côté ou des deux côtés avec des alcools en C₁-C₄ et des produits d'addition d'oxyde d'éthylène et d'oxyde de propylène sur de l'éthylènediamine, et en ce que les particules agglomérées se désagrègent en les particules primaires lorsqu'elles sont introduites dans un milieu aqueux.

2. Procédé de préparation de polymères finement divisés, hydrosolubles ou gonflant dans l'eau, par isolement des particules de polymère à partir d'émulsions eau-dans-huile de polymères hydrosolubles ou gonflant dans l'eau selon la revendication 1, caractérisé en ce que l'on soumet les émulsions de polymère eau-dans-huile à une déshydratation azéotrope en présence de 1 à 40% en poids, par rapport aux polymères, de polyalkylèneglycols à effet agglomérant qui contiennent au moins 2 motifs oxyde d'alkylène en liaison polymère et qui sont choisis dans le groupe des polyéthylèneglycols, des polypropylèneglycols, des copolymères séquencés d'oxyde d'éthylène et d'oxyde de propylène, des polyéthylèneglycols éthérifiés d'un côté ou des deux côtés avec des alcools en C₁-C₄ et des produits d'addition d'oxyde d'éthylène et d'oxyde de propylène sur de l'éthylènediamine, avec agglomération des particules primaires des émulsions de polymère, et on isole les particules de polymère agglomérées.

3. Procédé selon la revendication 2, caractérisé en ce que les polymères hydrosolubles sont obtenus par polymérisation de monomères hydrosolubles du groupe des acides carboxyliques en C₃-C₆ à insaturation monoéthylénique, de l'acrylamide, du méthacrylamide, de la N-vinylpyrrolidone, de l'acide 2-acrylamido-2-méthylpropanesulfonique, de l'acide vinylsulfonique, de l'acrylate de diméthylaminoéthyle et de l'acrylate de diéthylaminoéthyle, dans la phase aqueuse d'une émulsion eau-dans-huile, en présence d'émulsifiants eau-dans-huile et d'amorceurs de polymérisation.

4. Procédé selon la revendication 2, caractérisé en ce que les polymères gonflant dans l'eau sont obtenus par polymérisation de monomères à insaturation monoéthylénique hydrosolubles, en présence de 50 à 5000 ppm d'un monomère qui contient au moins deux doubles liaisons à insaturation éthylénique non conjuguées et qui sert de réticulant, dans la phase aqueuse d'une émulsion eau-dans-huile, en présence d'émulsifiants eau-dans-huile et d'amorceurs de polymérisation.

5. Procédé selon la revendication 4, caractérisé en ce que les polymères gonflant dans l'eau contiennent en liaison polymère, en tant que monomères à insaturation monoéthylénique hydrosolubles essentiels, de l'acide acrylique, de l'acrylamide et de la N-vinylpyrrolidone.

6. Utilisation de polymères hydrosolubles agglomérés finement divisés selon la revendication 1 comme agents de floculation et comme agents de rétention et de déshydratation.

7. Utilisation de polymères agglomérés finement divisés gonflant dans l'eau selon la revendication 1 comme épaississants pour accroître la viscosité de systèmes aqueux.

8. Utilisation selon la revendication 7, caractérisée en ce que les polymères gonflant dans l'eau sont utilisés comme épaississants pour des pâtes d'impression pour l'impression de textiles.
